# EUROPEAN PATENT APPLICATION

(11) **EP 4 517 289 A1**
(43) Date of publication of application: **05.03.2025**
(21) Application number: 24187102.9
(22) Date of filing: 08.07.2024
(51) Int. Cl.: G01M 99/00

(54) **SIMULATION TEST SYSTEM FOR SHOULDER-CARRYING AND HANDHOLDING OBJECT**

(30) Priority: 30.08.2023 CN 202311107312
(71) Applicant: Getac Technology Corporation, New Taipei City 221009 (TW)
(72) Inventor: WANG, Shih-Wei, 11568 Taipei City (TW); HSIEH, Ping-Han, 11568 Taipei City (TW); YANG, Chang-Yen, 11568 Taipei City (TW)
(74) Representative: Viering, Jentschura & Partner mbB Patent- und Rechtsanwälte

(57) **Abstract**

A simulation test system is provided for simulating a person who carries an object on his shoulder and handholds a portable object. The simulation test system includes a control unit (401) controlling the simulation test system to perform a simulation test. In the simulation test of the shoulder-carrying object, a carrying device (407) is attached with a strap (100) that connects with a back-packing object or a side-carrying object via at least one hook (101, 102). The carrying device (407) connects with a vertical-driven device (503) that is controlled by the control unit (401) for a vertical up-and-down movement, and connects with a horizontal-driven device (506) that is controlled by the control unit (401) for a horizontal swing movement. In the simulation test of the handheld object, an arm simulator (605) is attached with a handle that connects with the handheld object. The control unit (401) controls a swing-driven device (603) that connects with the arm simulator (605) to perform backward-and-forward movement.

## Description

### FIELD OF THE DISCLOSURE

The present invention relates to a simulation test system, and more particularly to a simulation test system in which a strength test is performed by simulating a person who carries an object on his shoulder or handholds a portable object.

### BACKGROUND OF THE DISCLOSURE

In response to certain needs of a user using appliances or electronic devices under various circumstances, a carrying device provided by a manufacturer is required to have sufficient strength in order to adapt to more extreme circumstances. For example, the user can carry a portable computer device on his shoulder or handhold the computer device. Hence, the structural design of hooks, straps, and various contacts of the carrying device applied to the computer device needs to be strengthened.

When the manufacturer designs the structures of the hooks, the straps, and the various contacts of the carrying device used for carrying the portable appliance or the electronic device, it is necessary to verify the strength of these structures of the carrying device under various circumstances. In the conventional technology, the hooks and the straps of the carrying device are verified through single-point or multiple-point tests. For example, a strength test in which more than six times of force is applied to the structures of the carrying device, or a strength test conducted during swinging of the carrying device can be adopted to verify whether or not the carrying device is sufficient to cope with specific circumstances.

### SUMMARY OF THE DISCLOSURE

In response to the requirement for verifying an equipment under an actual application circumstance, the present invention provides a simulation test system for simulating a person who carries an object on his shoulder or handholds a portable object. The simulation test system for shoulder-carrying an object includes a control unit and a carrying unit. The carrying unit includes a carrying device for attachment of a strap. The strap connects with a back-packing object or a side-carrying object via at least one hook. The carrying device connects with a fixing support between a vertical-driven device and a horizontal-driven device that are disposed on a first supporting structure.

The control unit controls the vertical-driven device of the carrying unit to perform a vertical up-and-down movement, and controls the horizontal-driven structure to perform a horizontal swing movement.

In one further aspect, the first supporting structure has an elongated groove, and the vertical-driven device includes a linear motor module disposed in the elongated groove. The linear motor module can drive the carrying device to perform a vertical movement via a transmission structure based on a timing diagram of simulation of a person in a running state. The carrying device can be driven to perform the vertical up-and-down movement with a vertical amplitude. Furthermore, when the carrying device is driven to perform the vertical movement, a time proportion is referred to for determining a first period of time at which the carrying device stays at a lowest point and a second period of time during which the carrying device vertically moves.

In an aspect of the present invention, the horizontal-driven device includes a servo motor module mounted on the first supporting structure, so as to drive the carrying device to perform a repeated horizontal and left-and-right swing movement via the fixing support.

In another aspect of the present invention, the control unit controls the vertical-driven device to drive the carrying device based on the timing diagram of simulation of a person in a running state to simulate a grounded period in which a left foot and a right foot of a person are on a ground and a soaring period in which the left foot and right foot of the person leave the ground. The horizontal-driven device is simultaneously controlled by the control unit to drive the carrying device to perform a horizontal movement that includes swinging leftward, swinging rightward, and returning to an original position in response to the grounded period and the soaring period.

Furthermore, the control unit controls the vertical-driven device based on the timing diagram of simulation of a person in a running state to perform a vertical movement at a reciprocating speed, and controls the horizontal-driven device to perform a left-and-right swing at an angular velocity and a swing angle. The carrying device is disposed at a tilt angle relative to the ground for simulating a person in a running state.

Thus, the control unit sets up a test quantity and a test duration based on a test requirement for repeatedly controlling the vertical-driven device to perform the vertical up-and-down movement and repeatedly controlling the horizontal-driven device to perform the horizontal swing movement.

According to an embodiment of the simulation test system for handholding an object, the simulation test system includes the control unit and an arm simulation test unit. The arm simulation test unit includes an arm simulator for attachment of a handle that is connected to a handheld test object. The arm simulator pivotally connects with a swing-driven device disposed on a second supporting structure. The control unit controls the swing-driven device of the arm simulation test unit to perform a backward-and-forward movement.

In an aspect of the present invention, the swing-driven device includes a servo motor module that connects with the arm simulator via a pivot structure. The control unit controls the servo motor module to drive the arm simulator to perform the backward-and-forward movement at an angle and an up-and-down movement with an amplitude.

Thus, the control unit also sets up a test quantity and a test duration based on a test requirement for repeatedly controlling the swing-driven device to perform the backward-and-forward movement.

These and other aspects of the present invention will become apparent from the following description of the embodiment taken in conjunction with the following drawings and their captions, although variations and modifications therein may be affected without departing from the spirit and scope of the novel concepts of the invention.

### BRIEF DESCRIPTION OF THE DRAWINGS

The described embodiments may be better understood by reference to the following description and the accompanying drawings, in which:
Fig. 1 is a schematic diagram illustrating a person carrying a shoulder-carrying object;
Fig. 2 is a schematic diagram illustrating a person handholding a portable object;
Fig. 3 is an example of a timing diagram of simulation of a person in a running state according to one embodiment of the present invention;
Fig. 4 is a schematic diagram illustrating main circuit components of a simulation test system for shoulder-carrying an object according to one embodiment of the present invention;
Fig. 5 is a schematic diagram illustrating a simulator for a shoulder-carrying object according to one embodiment of the present invention;
Fig. 6 is a schematic diagram illustrating main circuit components of a simulation test system for handholding an object according to one embodiment of the present invention;
Fig. 7 is a schematic diagram illustrating a simulator for handholding a portable object according to one embodiment of the present invention;
Fig. 8 is a schematic diagram illustrating integrated operation of the simulation test system according to one embodiment of the present invention;
Fig. 9 is a flowchart illustrating operation of a simulation test system according to a first embodiment of the present invention; and
Fig. 10 is a flowchart illustrating operation of a simulation test system according to a second embodiment of the present invention.

### DETAILED DESCRIPTION OF THE EXEMPLARY EMBODIMENTS

The present invention is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a," "an" and "the" includes plural reference, and the meaning of "in" includes "in" and "on." Titles or subtitles can be used herein for the convenience of a reader, which shall have no influence on the scope of the present invention.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present invention or of any exemplified term. Likewise, the present invention is not limited to various embodiments given herein. Numbering terms such as "first," "second" or "third" can be used to describe various components, signals or the like, which are for distinguishing one component/signal from another one only, and are not intended to, nor should be construed to impose any substantive limitations on the components, signals or the like.

The present invention provides a simulation test system for simulating a person who carries an object on his shoulder or handholds a portable object. The simulation test system simulates states of the person carrying an object on his shoulder and states of the person who handholds a portable object. The simulation test system performs a destructive test on circumstances in which the person carries an object on his shoulder or handholds a portable object, so as to test various scenarios of destruction. For example, when the person who carries an object on his shoulder or handholds a portable object moves around, destructive points are mostly located on a strap and a hook. However, the destructive points may also be located on the other places or components of the object.

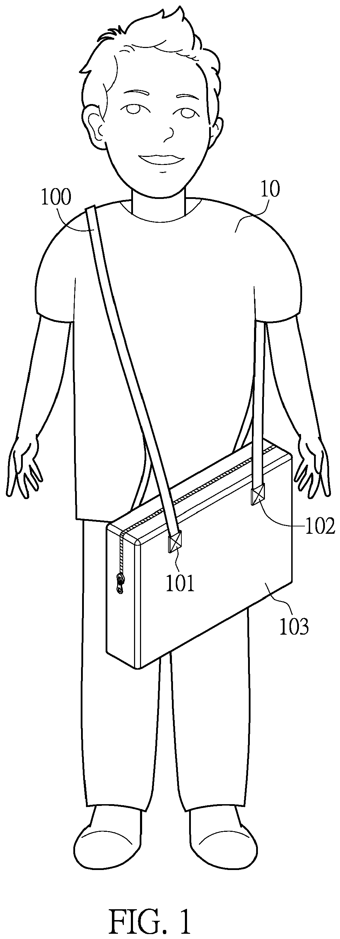

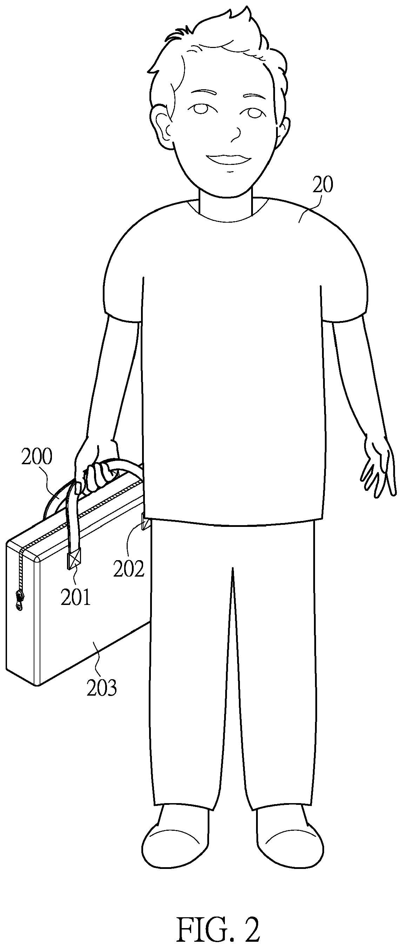

Fig. 1 is a schematic diagram depicting a first aspect of the simulation test system that simulates a person who carries an object on his shoulder, and Fig. 2 is a schematic diagram depicting a second aspect of the simulation test system that simulates a person who handholds a portable object.

Fig. 1 shows a person 10 who carries an object 103 on his shoulder by a strap 100 and hooks 101 and 102 that are attached to the strap 100. The strap 100 and the hooks 101, 102 that are connected to the object 103 are pivots that need to be strengthened. The simulation test system for the shoulder-carrying object is provided for simulating to test the pivots that may be damaged when the object moves with a specific strength or being used for a long time.

Fig. 2 shows a person 20 who handholds a portable object 203 via a carrying strap 200 and attached hooks 201 and 202. The diagram shows several pivots that need to be strengthened, and the pivots are important parts to be tested by simulation. The pivots are such as the carrying strap 200 and the hooks 201, 202. Therefore, the simulation test system for handholding an object can perform a simulation test on the abovementioned portions for movement with a specific strength or for a long-time movement.

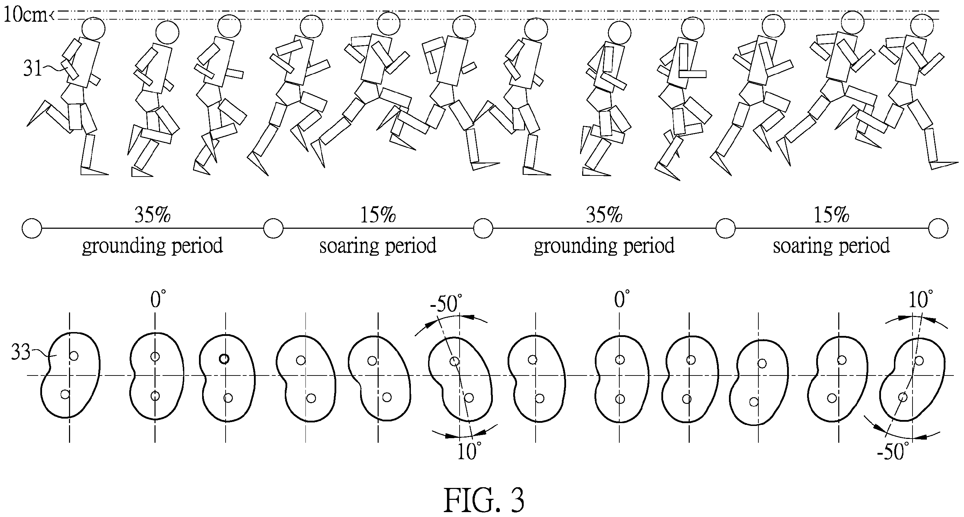

According to one embodiment of the present invention, the simulation test system operates by referring to a timing diagram of simulation of a person in a running state that is used to describe a physical status of the running person. The timing diagram of simulation of a person in a running state is established through experiments and by recording the status of the running person. Fig. 3 is an example of the timing diagram.

The timing diagram depicts a grounded period when two feet of a person 31 touch a ground and a soaring period when the two feet are away from the ground in a running cycle. In the present example, a time proportion of the time during which one foot of the person 31 touches the ground to the time during which the foot is away from the ground is about seven to three. Further, a vertical change range in the running cycle is about 10 centimeters.

In the present example, an upper half of the timing diagram of simulation of a person in a running state shows that a height distance is formed between an upper position and a lower position of the body of the person 31 when running normally. The timing diagram shows that the height distance is about 10 centimeters. Further, when the person 31 runs for a period of time, the status of the left foot and the right foot of the person 31 changes. In this timing diagram, the time proportion of the grounded period to the soaring period due to the two feet being alternately supported by the ground and away from the ground is shown. Corresponding to the status of the running person 31 shown in the upper half of the timing diagram, a lower half of the timing diagram shows that a left-and-right swing amplitude is formed by a swinging body 33 of the person 31 when he is running.

It should be noted that the timing diagram shown in Fig. 3 is only used to describe the status of a running person under test in a specific condition, and the numerals shown in the diagram are only the data measured under a specific experiment and are not used to limit the timing diagram that is referred to by the simulation test system of the present invention.

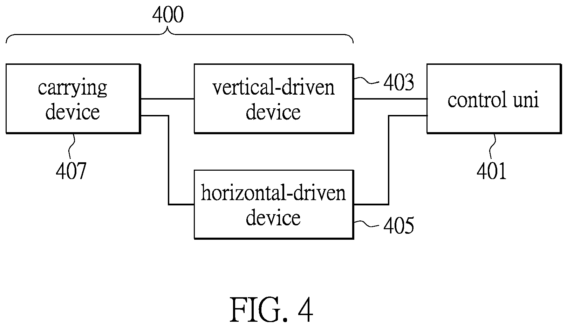

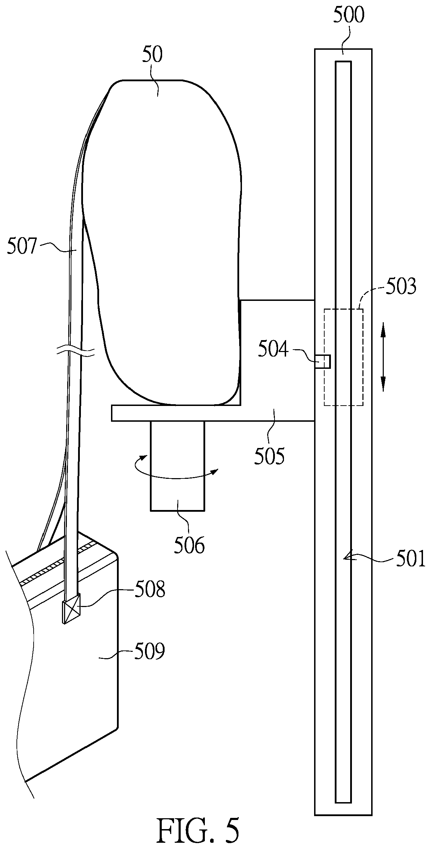

The simulation test system can operate based on the timing diagram of simulation of a person in a running state, so as to simulate a person who carries an object on his shoulder. Fig. 4 is a schematic diagram illustrating main circuit components of the simulation test system according to one embodiment of the present invention. Reference can also be made to Fig. 5, which is a schematic diagram illustrating a simulator for shoulder-carrying an object according to one embodiment of the present invention.

Fig. 4 shows a control unit 401 and components electrically connected with the control unit 401. The simulation test system includes a carrying unit 400, and the carrying unit 400 includes a carrying device 407, a vertical-driven device 403, and a horizontal-driven device 405. The carrying device 407 is used for attachment of a strap (e.g., the strap 100 of Fig. 1). The strap connects with a back-packing object or a side-carrying object (e.g., the object 103 of Fig. 1) via at least one hook. When the simulation test system for shoulder-carrying an object is in operation, operating parameters can be configured based on the timing diagram of simulation of a person in a running state. The operating parameters are, for example, the timing, a vertical movement amplitude, and a speed of the vertical-driven device 403 that performs a vertical up-and-down movement. According to the operating parameters, the control unit 401 controls the vertical-driven device 403 and the horizontal-driven device 405 to perform the simulation test.

Regarding the structure of the simulator for shoulder-carrying an object, reference can be made to Fig. 5. A carrying device 50 is used to simulate the human body. A shoulder-carrying object 509 under test can be carried by the carrying device 50 via a strap 507 for simulating the status of a running person who carries the object 509 on his shoulder. The carrying device 50 can be mounted on a fixing support 505 between a vertical-driven device 503 and a horizontal-driven device 506 that are disposed on a first supporting structure 500. One end of the fixing support 505 connects with the vertical-driven device 53 via a transmission structure 504, and the other end of the fixing support 505 has the horizontal-driven device 506 disposed thereon.

The diagram shows that the first supporting structure 500 has an elongated groove 501, and the vertical-driven device 503 has a linear motor module disposed in the elongated groove 501. The linear motor module is controlled by a control unit, and is capable of using the transmission structure 504 to drive the carrying device 50 to perform a vertical up-and-down movement through the fixing support 505 based on the timing diagram of simulation of a person in a running state. The control unit controls the linear motor module of the vertical-driven device 503 to perform the vertical up-and-down movement with a vertical amplitude according to the operating parameters, and determines a first period of time the carrying device 50 stays at a lowest point and a second period of time the carrying device 50 vertically moves based on the time proportion of the grounded period to the soaring period of the human body shown in the timing diagram of simulation of a person in a running state.

On the other hand, the control unit also controls the horizontal-driven device 506 of a carrying unit to perform a horizontal swing movement. According to one embodiment of the present invention, the horizontal-driven device 506 includes a servo motor module disposed on the fixing support 505 of the first supporting structure 500. The servo motor module is controlled by the control unit through a shaft vertical to the ground for controlling the horizontal-driven device 506 to operate according to the operating parameters of the left-and-right swing amplitude as shown in the timing diagram of simulation of a person in a running state. Further, the control unit can drive the carrying device 50 to perform a repeated horizontal and left-and-right swing movement by repeatedly rotating about plus or minus ten degrees through the fixing support 505, so as to simulate a swing cycle of the human hip during walking or running.

Thus, when the simulation test system is in operation, the control unit controls the vertical-driven device 503 to drive the carrying device 50 to move by simulating a grounded period when the left foot and the right foot of a person are on the ground and a soaring period when the left foot and the right foot of the person leave the ground based on the timing diagram of simulation of a person in a running state. In the meantime, the horizontal-driven device 506 drives the carrying device 50 to perform a horizontal movement that includes swinging to the left, swinging to the right, and returning to an original position in response to the grounded period and the soaring period.

In the process of continuous testing, the carrying device 50 is used to simulate a person with a running posture at a tilt angle relative to the ground. The control unit sets up a test quantity and a test duration based on a test requirement (which relates to requirements of strength of straps and related pivots). The control unit can repeatedly control the vertical-driven device 503 to perform a vertical movement at a reciprocating speed based on the timing diagram of simulation of a person in a running state, and can control the horizontal-driven device 506 to perform a left-and-right swing with a swing angle and an angular velocity.

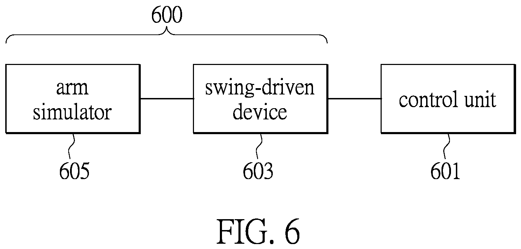

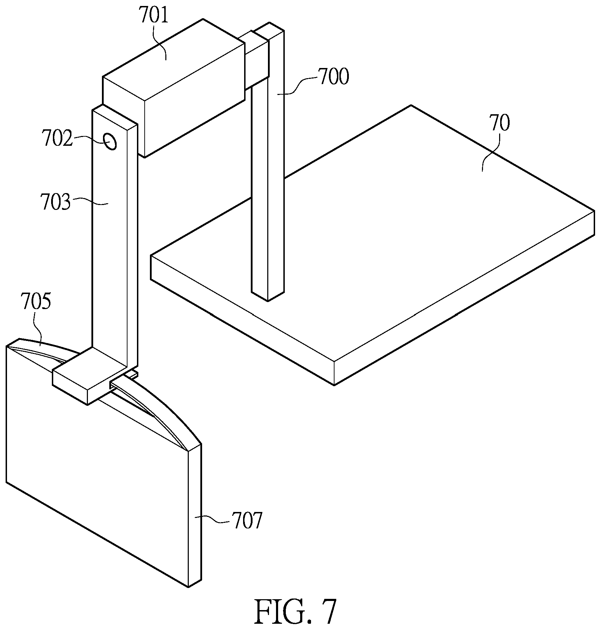

In one further embodiment of the present invention, the simulation test system is used for a simulation test of handholding an object. Reference is made to Fig. 6, which is a schematic diagram illustrating main circuit components of the simulation test system. Reference can also be made to Fig. 7, which is a schematic diagram illustrating a simulator for handholding an object according to one embodiment of the present invention.

The simulation test system shown in Fig. 6 includes a control unit 601 and an arm simulation test unit 600 that is electrically connected with the control unit 601. The arm simulation test unit 600 mainly includes a swing-driven device 603 and an arm simulator 605. The control unit 601 controls operations of the simulation test system. For example, the simulation test system configures the operating parameters based on the movement of an ordinary person who swings his upper arm when carrying a portable device, and the control unit 601 relies on the operating parameters to drive the swing-driven device 603 to perform a backward-and-forward movement.

In Fig. 7, a test platform 70 is shown. The test platform 70 is mounted with a second supporting structure 700 that includes a swing-driven device 701. The swing-driven device 701 connects with an arm simulator 703 that is used to simulate movement of an arm via a pivot structure 702. The arm simulator 703 is used for attachment of a handle 705 that connects with a handheld test object 707.

According one of the embodiments of the present invention, the swing-driven device 701 includes a servo motor module that connects with the arm simulator 703 via the pivot structure 702. According to the operating parameters, the control unit shown in Fig. 6 controls the servo motor module to drive the arm simulator 703 to perform a backward-and-forward movement at an angle and an up-and-down movement with an amplitude. In addition, based on a test requirement (which relates to a requirement of strength of the handle 705 and related pivots), the control unit sets up a test quantity and a test duration for repeatedly controlling the swing-driven device 701 to perform the backward-and-forward movement.

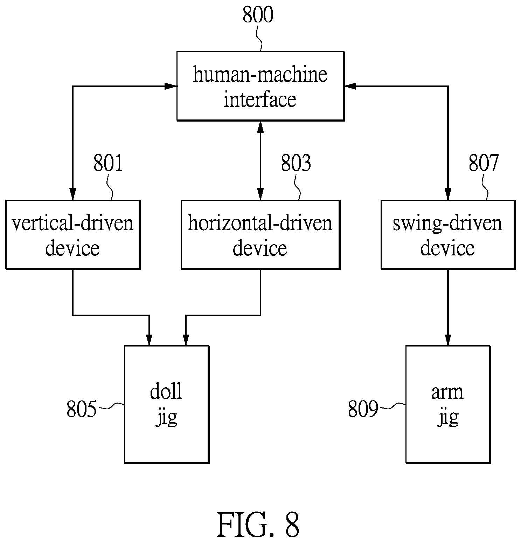

Reference is made to Fig. 8, which is a schematic diagram illustrating a simulation test system that can simultaneously simulate a person who carries an object on his shoulder and another person who handholds another object. The simulation test system is used to test an electronic device having a strap and another electronic device having a handle. The simulation test system achieves integrated operations via a human-machine interface 800.

A system operator or an automatic control system controls operations of a vertical-driven device 801, a horizontal-driven device 803, and a swing-driven device 807 via the human-machine interface 800. According to the above embodiments, the control unit controls the vertical-driven device 801 and the horizontal-driven device 803 to drive a doll jig 805 to operate. The doll jig 805 is such as a carrying device that is attached with a strap and connects with a shoulder-carrying object. The simulation test system performs a simulation test on the shoulder-carrying object according to the operating parameters. On the other hand, the control unit controls the swing-driven device 807 to drive an arm jig 809, and the arm jig 809 can be an arm simulator that is attached with a handle and connects with a handheld object. The control unit performs the simulation test of handholding an object according to the operating parameters.

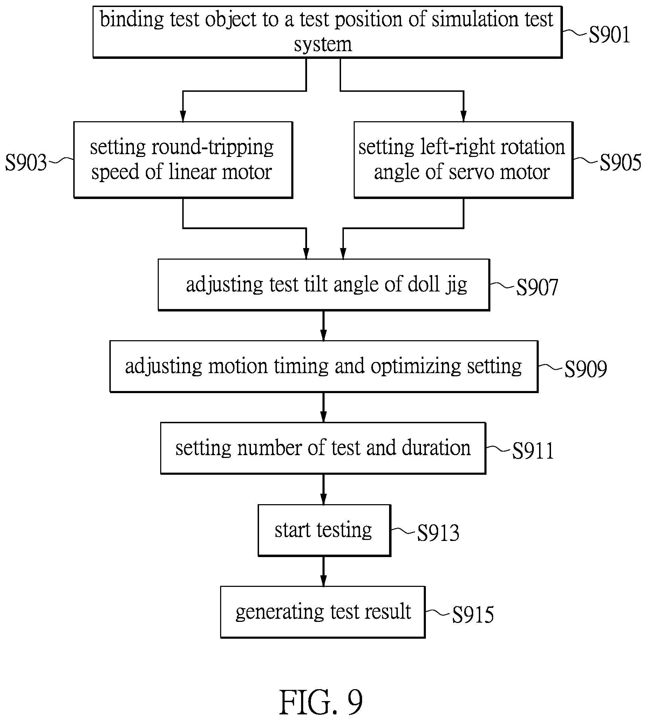

Regarding the simulation test on the shoulder-carrying object, reference can be made to Fig. 9, which is a flowchart of operations of a simulation test system according to one embodiment of the present invention.

For testing a simulated shoulder-carrying object, an initialization process is performed at the beginning (step S901). A test object is mounted on a test position of the simulation test system. For example, a strap is configured to be attached to a doll jig and connect with the shoulder-carrying object via at least one hook. Afterwards, a reciprocating speed of a linear motor of a vertical-driven device is set based on a test requirement (step S903), a left-and-right rotation angle of a servo motor of a horizontal-driven device is set (step S905), and a tilt angle of the doll jig is adjusted (step S907).

Next, the control unit adjusts the motion timing with respect to some details to be tested for simulating the human body, and accordingly optimizes the setting (step S909). The control unit configures a test quantity and a test duration based on the test requirement (step S911). The simulation test system starts to perform the simulation test (step S913) and generates a test result (step 915).

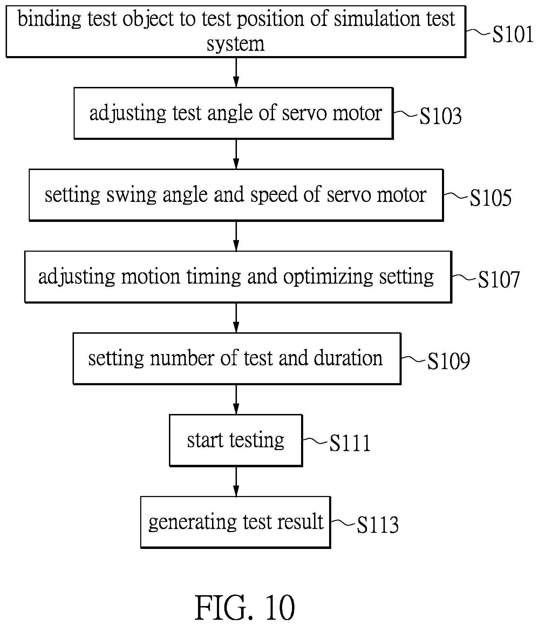

Reference is made to Fig. 10, which is a flowchart illustrating operations of the simulation test system for handholding an object according to one embodiment of the present invention.

For simulating a person who handholds an object, a test object is mounted on a test position of the simulation test system (step S101). A strap that is provided for a person to handhold the test object is attached with an arm simulator. A test angle of a servo motor of a swing-driven device is adjusted (step S103), and a swing angle and a speed of the servo motor are set (step S105).

Then, the simulation test system adjusts a motion timing and optimizes setting (step S 107), and also sets a test quantity and a test duration based on the test requirement (step S 109). After the simulation test starts (step S 111), a test result is generated (step S 113).

The test results generated by the above embodiments can be referred to for evaluating strengths and tolerance of a strap, hooks, and other portions effectively. Accordingly, the quality of a product can be improved by repeating the simulation test, so as to satisfy various requirements under different circumstances.

In sum, according to the above embodiments of the simulation test system for the shoulder-carrying an object and for handholding an object, the simulation test system is used to test the straps, the hooks, and other related structures of the object by simulating a person who carries an electronic device with the object. The simulation test system achieves composite and accurate tests on the structural strength of the object by simulating movement of the human body. For example, the simulation test system uses a linear motor to adjust an upward speed and a downward speed of the object, so as to simulate an up-and-down movement of the human body when the person is running. Further, the simulation test system uses a servo motor and related jigs to simulate a twisting movement of a lower half of the human body. By adjusting a tilt angle of the human body, and a swing speed and a swing amplitude of the two arms of the person, the simulation test system can also simulate a swing movement when the person handholds a portable object. Therefore, the simulation test system can achieve a simulation test that more precisely reflects actual situations.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to enable others skilled in the art to utilize the invention and various embodiments and with various modifications as are suited to the particular use contemplated. Alternative embodiments will become apparent to those skilled in the art to which the present invention pertains without departing from its spirit and scope.

## Claims

1. A simulation test system for shoulder-carrying an object, **characterized by** comprising:
a control unit (401); and
a carrying unit (400) electrically connected with the control unit (401) and comprising a carrying device (407) for attachment of a strap (100), wherein the strap (100) connects to a back-packing object or a side-carrying object via at least one hook (101, 102); wherein the carrying device (407) connects with a fixing support (505) between a vertical-driven device (503) and a horizontal-driven device (506) that are disposed on a first supporting structure (500);
wherein the control unit (401) controls the vertical-driven device (503) of the carrying unit (400) to perform a vertical up-and-down movement, and controls the horizontal-driven device (506) to perform a horizontal swing movement.

2. The simulation test system according to claim 1, wherein the first supporting structure (500) has an elongated groove, and the vertical-driven device (503) comprises a linear motor module disposed in the elongated groove; wherein the linear motor module uses a transmission structure to drive the carrying device (407) to perform the vertical up-and-down movement with a vertical amplitude based on a timing diagram of simulation of a person in a running state, and determines a first period of time at which the carrying device (407) stays at a lowest point and a second period of time during which the carrying device (407) vertically moves based on a time proportion.

3. The simulation test system according to claim 2, wherein the control unit (401) controls the vertical-driven device (503) to perform a vertical movement at a reciprocating speed based on the timing diagram of simulation of a person in a running state, and controls the horizontal-driven device (506) to perform a left-and-right swing at a swing angle and an angular velocity.

4. The simulation test system according to claim 3, wherein the control unit (401) sets up a test quantity and a test duration based on a test requirement for repeatedly controlling the vertical-driven device (503) to perform the vertical up-and-down movement and repeatedly controlling the horizontal-driven device (506) to perform the horizontal swing movement.

5. The simulation test system according to claim 1, wherein the horizontal-driven device (506) comprises a servo motor module mounted on the first supporting structure (500), and the servo motor module drives the carrying device (407) to perform a repeated horizontal and left-and-right swing movement via the fixing support (505).

6. The simulation test system according to claim 5, wherein the control unit (401) controls the vertical-driven device (503) to drive the carrying device (407) based on a timing diagram of simulation of a person in a running state to simulate a grounded period in which a left foot and a right foot of a person are on a ground and a soaring period in which the left foot and the right foot of the person leave the ground; and wherein the control unit (401) simultaneously controls the horizontal-driven device (506) to drive the carrying device (407) to perform a horizontal movement that comprises swinging leftward, swinging rightward, and returning to an original position in response to the grounded period and the soaring period.

7. The simulation test system according to claim 6, wherein the control unit (401) controls the vertical-driven device (503) based on the timing diagram of simulation of a person in a running state to perform a vertical movement at a reciprocating speed, and controls the horizontal-driven device (506) to perform a left-and-right swing at a swing angle and an angular velocity.

8. The simulation test system according to claim 7, wherein the control unit (401) sets up a test quantity and a test duration based on a test requirement for repeatedly controlling the vertical-driven device (503) to perform the vertical up-and-down movement and repeatedly controlling the horizontal-driven device (506) to perform the horizontal swing movement.

9. A simulation test system for handholding an object, **characterized by** comprising:
a control unit (401); and
an arm simulation test unit (600) electrically connected with the control unit (401) and having an arm simulator (605) for attachment of a handle that is connected with a handheld test object (707); wherein the arm simulator (605) is pivotally connected with a swing-driven device (603) disposed on a second supporting structure;
wherein the control unit (401) controls the swing-driven device (603) of the arm simulation test unit (600) to perform a backward-and-forward movement.

10. The simulation test system according to claim 9, wherein the control unit (401) sets up a test quantity and a test duration based on a test requirement for repeatedly controlling the swing-driven device (603) to perform the backward-and-forward movement.

11. The simulation test system according to claim 9, wherein the swing-driven device (603) comprises a servo motor module that connects with the arm simulator (605) via a pivot structure, and the control unit (401) controls the servo motor module to drive the arm simulator (605) to perform the backward-and-forward movement at an angle and an up-and-down movement with an amplitude and sets up a test quantity and a test duration based on a test requirement for repeatedly controlling the swing-driven device (603) to perform the backward-and-forward movement.

12. A simulation test system for testing a strap (100) used for an electronic device by simulating shoulder-carrying an object, **characterized by** comprising:
a control unit (401);
a carrying device (407) for attachment of the strap (100);
a vertical-driven device (503) electrically connected with the control unit (401); and
a horizontal-driven device (506) electrically connected with the control unit (401), wherein the control unit (401) controls the vertical-driven device (503) to perform a vertical up-and-down movement, and controls the horizontal-driven device (506) to perform a horizontal swing movement.

13. The simulation test system according to claim 12, wherein the control unit (401) controls the vertical-driven device (503) based on a timing diagram of simulation of a person in a running state to perform a vertical movement at a reciprocating speed, controls the horizontal-driven device (506) to perform a left-and-right swing at a swing angle and an angular velocity, sets up a test quantity and a test duration based on a test requirement for repeatedly controlling the vertical-driven device (503) to perform the vertical up-and-down movement and repeatedly controlling the horizontal-driven device (506) to perform the horizontal swing movement.

14. A simulation test system for testing a handle used for an electronic device by simulating handholding a portable object, **characterized by** comprising:
a control unit (401);
an arm simulator (605) used for attachment of the handle; and
a swing-driven device (603) electrically connected with the control unit (401), wherein the control unit (401) controls the swing-driven device (603) to perform a backward-and-forward movement.

15. The simulation test system according to claim 14, wherein the swing-driven device (603) comprises a servo motor module that is connected with the arm simulator (605) via a pivot structure, and the control unit (401) controls the servo motor module to drive the arm simulator (605) to perform the backward-and-forward movement at an angle and an up-and-down movement with an amplitude and sets up a test quantity and a test duration based on a test requirement for repeatedly controlling the swing-driven device (603) to perform the backward-and-forward movement.
